# EUROPEAN PATENT APPLICATION

(11) **EP 4 660 984 A1**
(43) Date of publication of application: **10.12.2025**
(21) Application number: 24750217.2
(22) Date of filing: 29.01.2024
(51) Int. Cl.: G08G 5/00, B64F 1/36

(54) **FLIGHT ASSISTANCE SYSTEM, METHOD, AND PROGRAM**

(30) Priority: 30.01.2023 JP 2023012231
(71) Applicant: KAWASAKI JUKOGYO KABUSHIKI KAISHA, Kobe-shi, Hyogo 650-8670 (JP)
(72) Inventor: MATSUMURA, Shigeru, Chuo-ku, Kobe-shi Hyogo 650-8670 (JP); KUBO, Yoshiharu, Chuo-ku, Kobe-shi Hyogo 650-8670 (JP); DESSEN, Yuki, Chuo-ku, Kobe-shi Hyogo 650-8670 (JP); UMEDA, Takuya, Chuo-ku, Kobe-shi Hyogo 650-8670 (JP); MORI, Shumpei, Chuo-ku, Kobe-shi Hyogo 650-8670 (JP)
(74) Representative: Leinweber & Zimmermann
(86) International application number: PCT/JP2024/002685
(87) International publication number: WO 2024/162268

(57) **Abstract**

A flight support system is a flight support system that supports flight of an aircraft. The flight support system includes: a database that stores flight management manuals each of which includes before-takeoff check items that are different among airframe types; and processing circuitry connected to the database. The processing circuitry is configured to: receive a takeoff permission request of a target aircraft from a user terminal; acquire the airframe type of the target aircraft; acquire actual data regarding the before-takeoff check item corresponding to the target aircraft; refer to the database and compare the actual data with the before-takeoff check item of the flight management manual corresponding to the airframe type of the target aircraft; and transmit output information to the user terminal, the output information including information regarding a result of the comparison.

## Description

### Technical Field

The present disclosure relates to a flight support system, a flight support method, and a flight support program.

### Background Art

PTL 1 discloses a system that: determines based on peripheral information whether or not a flying device can take off, the peripheral information indicating a peripheral state of an accommodation facility that accommodates the flying device; and transmits a result of the determination to a flight management device.

### Citation List

### Patent Literature

PTL 1: International Publication No. 2019/188250

### Summary of Invention

### Technical Problem

However, even when there is the peripheral state in which a specific type of flying device cannot take off, another type of flying device may be able to take off. In contrast, even when there is the peripheral state in which a specific type of flying device can take off, another type of flying device may not be able to take off. Therefore, the opportunity loss of the flight may occur, and whether or not the takeoff is permitted cannot be appropriately determined in accordance with an airframe type.

An object of one aspect of the present disclosure is to reduce the opportunity loss of the flight and realize appropriate determination regarding the permission of the takeoff in accordance with the airframe type.

### Solution to Problem

A flight support system according to one aspect of the present disclosure is a flight support system that supports flight of an aircraft, the flight support system including: a database that stores flight management manuals each of which includes before-takeoff check items that are different among airframe types; and processing circuitry connected to the database. The processing circuitry is configured to: receive a takeoff permission request of a target aircraft from a user terminal; acquire the airframe type of the target aircraft; acquire actual data regarding the before-takeoff check item corresponding to the target aircraft; refer to the database and compare the actual data with the before-takeoff check item of the flight management manual corresponding to the airframe type of the target aircraft; and transmit output information to the user terminal, the output information including information regarding a result of the comparison.

A flight support method according to one aspect of the present disclosure is a flight support method that supports flight of an aircraft, the flight support method including: receiving a takeoff permission request of a target aircraft from a user terminal; acquiring an airframe type of the target aircraft; acquiring actual data regarding a before-takeoff check item corresponding to the target aircraft; referring to a database that stores flight management manuals each of which includes before-takeoff check items that are different among airframe types, and comparing the actual data with the before-takeoff check item of the flight management manual which corresponds to the airframe type of the target aircraft; and transmitting output information to the user terminal, the output information including information regarding a result of the comparison.

A flight support program according to one aspect of the present disclosure makes at least one processor execute the flight support method. The program may be stored in a computer-readable storage medium. The storage medium is a non-transitory, tangible medium. The storage medium may be incorporated in or externally attached to a computer (such as a mobile information terminal, a personal computer, or a server). The storage medium may . include a RAM, a ROM, an EEPROM, a storage, and the like and may be, for example, a hard disk, a flash memory, an optical disk, or the like. The program stored in the storage medium may be executed in a computer to which the storage medium is directly connected, or may be executed in a computer which is connected to the storage medium through a network, such as the Internet.

### Advantageous Effects of Invention

According to one aspect of the present disclosure, since the actual data is compared with the before-takeoff check item of the flight management manual corresponding to the airframe type of the target aircraft, whether or not the takeoff is permitted can be determined in accordance with the airframe type. Therefore, the opportunity loss of the flight can be reduced, and the appropriate determination regarding the permission of the takeoff in accordance with the airframe type can be realized.

### Brief Description of Drawings

FIG. 1 is a schematic diagram of a flight support system according to an embodiment.
FIG. 2 is a block diagram of a user terminal of FIG. 1.
FIG. 3 is a block diagram of a server of FIG. 1.
FIG. 4 is a sequence diagram for explaining before-takeoff processing of the flight support system of FIG. 1.
FIG. 5 is a sequence diagram subsequent to FIG. 4.
FIG. 6 is a screen image displayed on an output interface of the user terminal of FIG. 2.
FIG. 7 is a sequence diagram for explaining before-arrival processing of the flight support system of FIG. 1.

### Description of Embodiments

Hereinafter, an embodiment will be described with reference to the drawings.

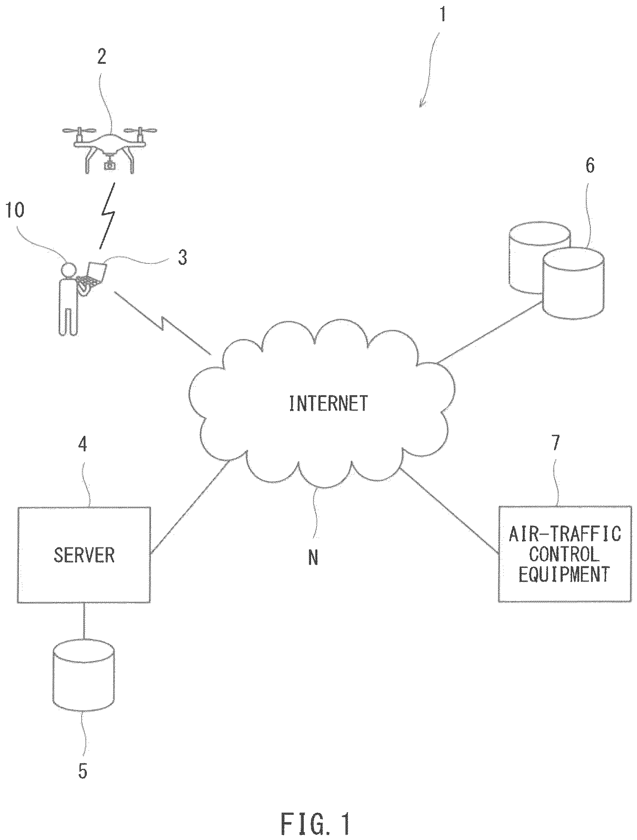

FIG. 1 is a schematic diagram of a flight support system 1 according to the embodiment. As shown in FIG. 1, the flight support system 1 includes a server 4 that supports a user 10 who uses a user terminal 3 to make a target aircraft 2 take off and fly. The target aircraft 2 is, for example, a remotely piloted aircraft. The server 4 is connected to a network N, such as the Internet. An internal database 5 is connected to the server 4.

The user 10 operates the user terminal 3 used to control the target aircraft 2. The user terminal 3 communicates with the target aircraft 2 through wireless communication. The user terminal 3 is connected to the server 4 through the network N. The server 4 is connected to open databases 6 through the network N. The server 4 is connected to a computer of air-traffic control equipment 7 through the network N.

The internal database 5 includes a database that stores flight plans permitted in advance by a permission institution, such as the European Aviation Safety Agency, Infrastructure, Transport and Tourism. The flight plan includes user specific information, airframe specific information, a flight permitted area, a flight permitted period of time, a scheduled takeoff place, a scheduled landing place, a scheduled takeoff time, a scheduled landing time, and the like.

The internal database 5 includes a database that stores flight management manuals which are different among airframe types of aircrafts. Each flight management manual includes before-takeoff check items that may be different among the airframes types of the aircrafts.
The before-takeoff check items include at least one selected from the group consisting of an environment in a location including a takeoff place, an airframe state, and the type of a cargo. In addition, the before-takeoff check items may include at least one selected from the group consisting of a permitted user, the flight permitted area, a flight permitted date-and-time range, and the peripheral state of the airframe.

The environment as the before-takeoff check item specifies a condition suitable for the takeoff at the takeoff place of the aircraft. The environment as the before-takeoff check item may specify a condition suitable for the flight of the target aircraft 2 in a flight path. Specifically, the environment as the before-takeoff check item may specify a condition suitable for the flight of the aircraft in the flight permitted area. The environment includes at least one selected from the group consisting of a wind speed, a weather, and the peripheral state. The peripheral state may be selected from a city, a mountainous area, a coastal area, and the like.

The airframe state as the before-takeoff check item specifies a condition that the airframe of the aircraft is normal. Whether or not the airframe of the aircraft is normal may be determined based on sensor data detected by a sensor mounted on the aircraft or may be determined by visual inspection of the aircraft by the user. The type of the cargo as the before-takeoff check item specifies an allowable condition of the type of the cargo to be carried by the aircraft.

The permitted user as the before-takeoff check item specifies a condition that the user who controls the target aircraft 2 is the user described in the permitted flight plan. The flight permitted area as the before-takeoff check item specifies a condition that a place from which the aircraft is scheduled to take off is within the flight permitted area of the permitted flight plan. The flight permitted date-and-time range as the before-takeoff check item specifies a condition that the date and time on which the aircraft is scheduled to take off are within a flight period of time of the permitted flight plan. The flight permitted date-and-time range as the before-takeoff check item may specify a condition that the date and time on which the aircraft is scheduled to take off are within an allowable range that is based on scheduled takeoff date and time of the permitted flight plan. The peripheral state of the airframe as the before-takeoff check item specifies a condition that there are no obstacles, such as persons and objects, around the aircraft.

The open databases 6 include a weather information open database that stores weather information. The weather information includes weather forecast provided by a public institution, such as the Meteorological Agency, or a private institution. The open databases 6 include an other-aircraft flight state database that stores flight states of the other aircrafts in real time. The flight states of the other aircrafts include positional information of the other aircrafts and may further include flight speeds, flight directions, and the like. The open databases 6 may include a geographic database including geographic information by which a city, a mountainous area, a coastal area, and the like are distinguishable on a map.

The computer of the air-traffic control equipment 7 utilizes a satellite positioning system to acquire, in real time, the positional information of all the aircrafts that are flying in a jurisdictional area. The computer of the air-traffic control equipment 7 uses the acquired positional information to update, in real time, the positions of the other aircrafts which are stored in the other-aircraft flight state database among the open databases 6. When an operator who manages the air-traffic control equipment 7 grasps the occurrence of an abnormality, such as a case where aircrafts that are flying have approached each other on a display of the air-traffic control equipment 7, the operator transmits an avoidance command to the user terminals of the aircrafts that have approached each other.

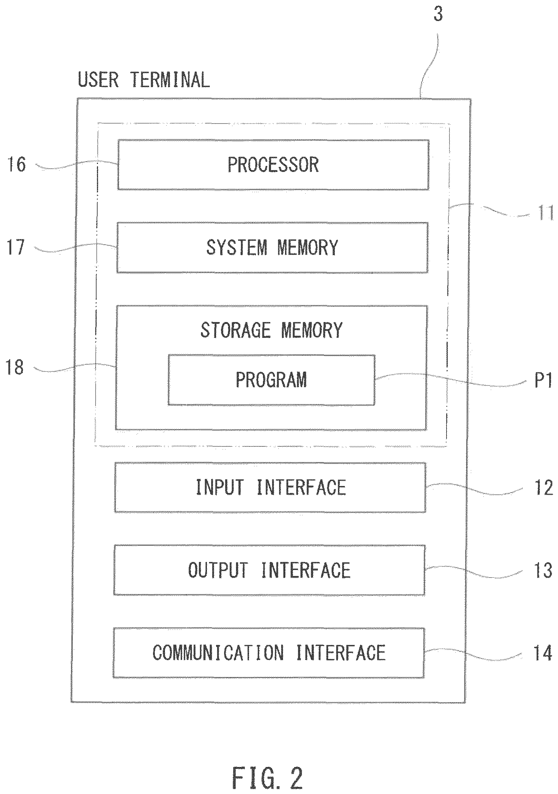

FIG. 2 is a block diagram of the user terminal 3 of FIG. 1. As shown in FIG. 2, the user terminal 3 includes first processing circuitry 11, an input interface 12, an output interface 13, and a communication interface 14. The input interface 12, the output interface 13, and the communication interface 14 are connected to the first processing circuitry 11. The first processing circuitry 11 includes a processor 16, a system memory 17, and a storage memory 18. The processor 16 is, for example, a CPU. The system memory 17 is, for example, a RAM. The storage memory 18 is an example of a computer-readable medium and is a non-transitory, tangible medium. The storage memory 18 may include a ROM. The storage memory 18 may include a hard disk, a flash memory, or a combination thereof. The storage memory 18 stores a program P1. A configuration in which the processor 16 executes the program P1 read out into the system memory 17 is one example of the first processing circuitry 11.

The input interface 12 is a user interface operated by the user 10. The input interface 12 includes at least one selected from, for example, a keyboard, a mouse, a touch panel, a lever, a handle, and the like. Information for the target aircraft 2, information for the server 4, information for the air-traffic control equipment 7, and the like are input to the input interface 12. As the information for the target aircraft 2, the flight plan, a takeoff command, and commands regarding a flight speed, a flight altitude, and a flight direction are input to the input interface 12. For example, an operation based on the flight plan, an ascending or descending command, a right or left movement command, a forward or backward movement command, and a right or left turn command are input to the input interface 12. As the information for the server 4, actual data received from a ground facility, actual data received from the target aircraft 2, a takeoff permission request, and the like are input to the input interface 12.

The output interface 13 is a user interface that outputs information to the user 10. The output interface 13 includes, for example, a display. The output interface 13 may further include a speaker. The output interface 13 outputs information that is based on the information received from the target aircraft 2, information that is based on the information received from the server 4, information that is based on the information received from the air-traffic control equipment 7, and the like. The output interface 13 may display the positional information of the target aircraft 2. When it is difficult for the user 10 to directly and visually confirm the target aircraft 2, the user 10 may input a command for the target aircraft 2 to the input interface 12 while visually confirming the position of the target aircraft 2 on the output interface 13. The communication interface 14 includes: a communicator that wirelessly communicates with the target aircraft 2; and a communicator that communicates with the server 4 and the air-traffic control equipment 7 through the network N.

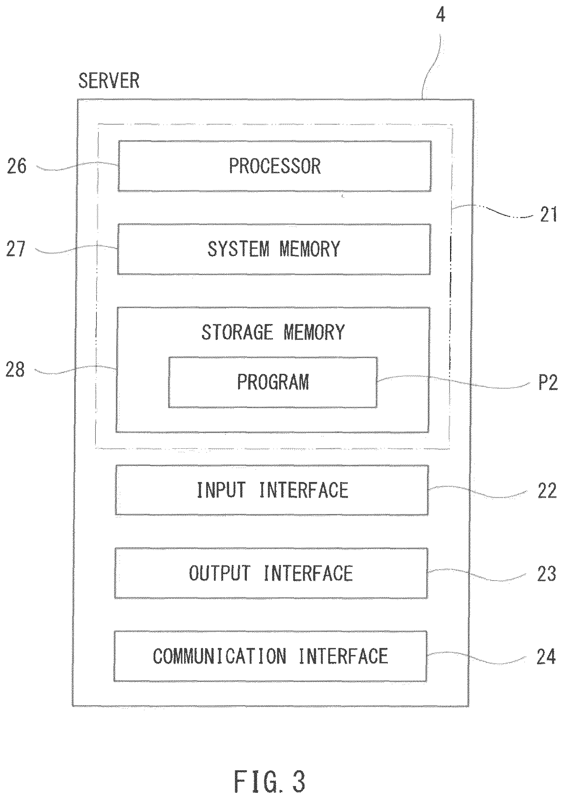

FIG. 3 is a block diagram of the server 4 of FIG. 1. As shown in FIG. 3, the server 4 includes second processing circuitry 21, an input interface 22, an output interface 23, and a communication interface 24. The input interface 22, the output interface 23, and the communication interface 24 are connected to the second processing circuitry 21. The second processing circuitry 21 includes a processor 26, a system memory 27, and a storage memory 28. The processor 26 is, for example, a CPU. The system memory 27 is, for example, a RAM. The storage memory 28 is an example of a computer-readable medium and is a non-transitory, tangible medium. The storage memory 28 may include a ROM. The storage memory 28 may include a hard disk, a flash memory, or a combination thereof. The storage memory 28 stores a program P2. A configuration in which the processor 26 executes the program P2 read out into the system memory 27 is one example of the second processing circuitry 21.

The input interface 22 is a user interface operated by an operator who manages the server 4. The input interface 12 includes at least one selected from, for example, a keyboard, a mouse, a touch panel, a lever, a handle, and the like. The output interface 23 is a user interface that outputs information to the operator who manages the server 4. The output interface 23 includes, for example, a display. The communication interface 24 includes a communicator that communicates with the user terminal 3, the open databases 6, and the air-traffic control equipment 7 through the network N.

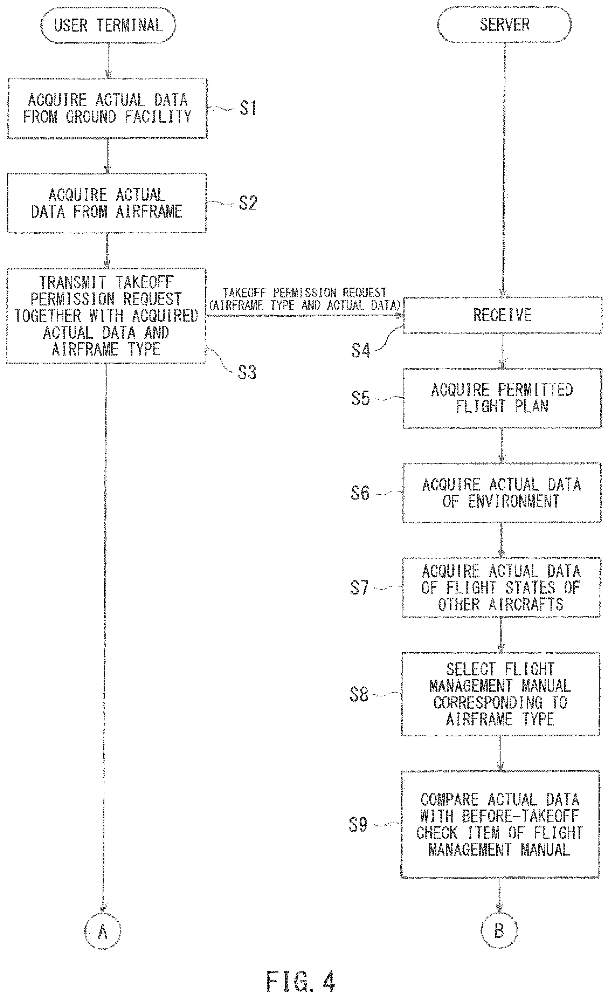

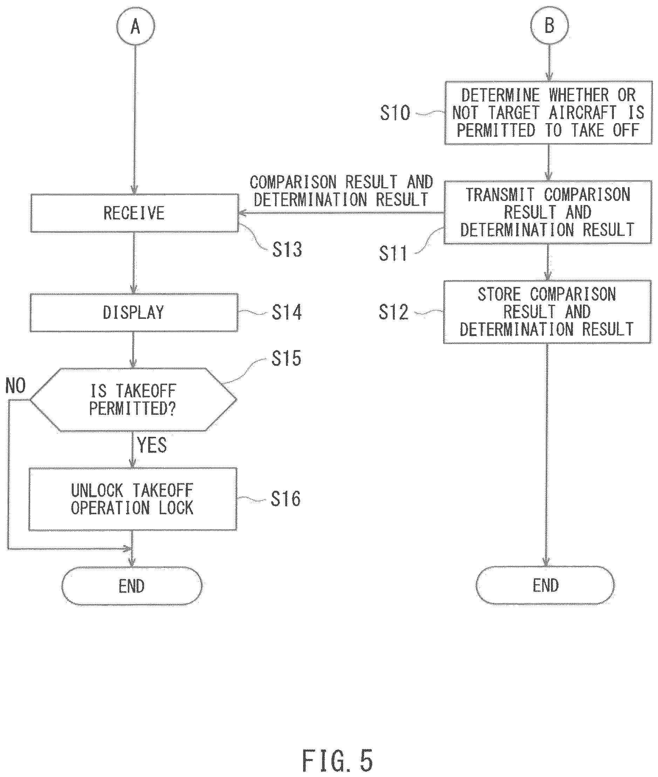

FIG. 4 is a sequence diagram for explaining before-takeoff processing of the flight support system 1 of FIG. 1. FIG. 5 is a sequence diagram subsequent to FIG. 4. Hereinafter, processing of the flight support system 1 will be described based on the flows of FIGS. 4 and 5 with suitable reference to the configurations shown in FIGS. 1 to 3. In the following description, the processing of the user terminal 3 is executed by the first processing circuitry 11, and the processing of the server 4 is executed by the second processing circuitry 21.

Before the target aircraft 2 takes off, the user 10 performs a procedure to know whether or not the target aircraft 2 can take off. The user terminal 3 is operated by the user 10 to acquire actual data from a ground facility which measures environment data of the vicinity of the scheduled takeoff place of the target aircraft 2 (Step S1). The user terminal 3 may regard a current position of the target aircraft 2, which is detected by the satellite positioning system, as the scheduled takeoff place of the target aircraft 2 or may regard the scheduled takeoff place of the flight plan stored in the internal database 5 as the scheduled takeoff place of the target aircraft 2. The ground facility includes at least one selected from the group consisting of, for example, an anemometer, an anemoscope, and a monitoring camera. Actual data acquired from the anemometer is a wind speed. Actual data acquired from the anemoscope is a wind direction. Actual data acquired from the monitoring camera is taken image data.

The user terminal 3 is operated by the user 10 to acquire sensor data detected by a sensor mounted on the target aircraft 2 (Step S2). The sensor data may be data detected by the sensor when the target aircraft 2 automatically performs a predetermined sequence operation set for inspecting the presence or absence of a malfunction. When the sensor data at the time of this sequence operation is a normal value, the user 10 can grasp that the target aircraft 2 is normal. Steps S1 and S2 may be performed simultaneously or in reverse order.

The user terminal 3 is operated by the user 10 to transmit the takeoff permission request to the server 4 (Step S3). The takeoff permission request includes the actual data acquired in Steps S1 and S2. The takeoff permission request may include a user ID or may include a date and time on which the takeoff permission request is transmitted. The takeoff permission request includes information by which the airframe type of the target aircraft 2 can be specified. The information by which the airframe type can be specified may be, for example, a model number of the airframe type of the target aircraft 2, an airframe ID of the target aircraft 2, a flight plan ID of the target aircraft 2, or any combination thereof. The actual data acquired in Steps S1 and S2 may be transmitted to the server 4 separately from the takeoff permission request. The information by which the airframe type of the target aircraft 2 can be specified may also be transmitted to the server 4 separately from the takeoff permission request. After the takeoff permission request is transmitted, Steps S1 and S2 may be executed, and the actual data acquired in Steps S1 and S2 may be then transmitted to the server 4.

The server 4 receives the takeoff permission request accompanied by the actual data acquired in Steps S1 and S2 and the information by which the airframe type of the target aircraft 2 can be specified (Step S4). The server 4 acquires the permitted flight plan of the target aircraft 2 from the internal database 5 (Step S5). When the internal database 5 stores the flight plans, the server 4 specifies and acquires the necessary permitted flight plan from the flight plans based on the information included in the takeoff permission request received in Step S4. The server 4 acquires the actual data of the environment of the flight permitted area of the permitted flight plan of the target aircraft 2 from the open database 6 (Step S6).

For example, the server 4 acquires current weather information of the flight permitted area of the target aircraft 2 as the actual data of the environment from the open database 6. The server 4 may acquire the geographic information indicating the peripheral state of the takeoff place of the target aircraft 2, as the actual data of the environment from the open database 6. The server 4 acquires the actual data of the current flight states of the other aircrafts from the open database 6 (Step S7). Steps S5 to S7 may be performed simultaneously or in different order. Moreover, when the environment data of the vicinity of the takeoff place of the target aircraft 2 is acquired in Step S6, Step S1 may be omitted.

From the flight management manuals stored in the internal database 5, the server 4 selects the flight management manual corresponding to the airframe type which has been acquired together with the takeoff permission request (Step S8). The server 4 compares the acquired actual data with the before-takeoff check item of the selected flight management manual (Step S9). When the acquired actual data satisfies the condition indicated by the before-takeoff check item, the server 4 determines that the before-takeoff check item is OK. When the acquired actual data does not satisfy the condition indicated by the before-takeoff check item, the server 4 determines that the before-takeoff check item is NG. For example, when the before-takeoff check item is a wind speed condition, the server 4 compares a wind speed upper limit defined in the selected flight management manual with wind speed data acquired from the user terminal 3. Then, when the wind speed indicated by the wind speed data is the wind speed upper limit or less, the server 4 may determine that the before-takeoff check item is OK. All the before-takeoff check items may include essential items and nonessential items. The server 4 may compare the information included in the takeoff permission request other than the actual data with the before-takeoff check item of the selected flight management manual. A before-takeoff check method is the same as the above method used when the actual data is compared. For example, the server 4 may compare the user ID of the selected flight management manual with the user ID acquired from the user terminal 3. Then, when these coincide with each other, the server 4 may determine that the before-takeoff check item is OK.

The server 4 determines based on a result of the comparison whether or not the target aircraft 2 is permitted to take off (Step S10). When the server 4 determines that all the essential items among all the before-takeoff check items are OK, the server 4 determines that the takeoff is permitted. When the server 4 determines that at least one of the essential items among all the before-takeoff check item is NG, the server 4 determines that the takeoff is not permitted. Only when the server 4 determines that all the before-takeoff check items are OK, the server 4 may determine that the takeoff is permitted.

The server 4 transmits the result of the comparison of Step S9 and the result of the determination of Step S10 as output information to the user terminal 3 (Step S11). The result of the comparison which is transmitted from the server 4 to the user terminal 3 may include only the before-takeoff check items that have been determined to be NG, without including the before-takeoff check items that have been determined to be OK. The result of the comparison which is transmitted from the server 4 to the user terminal 3 may include both of the before-takeoff check items that have been determined to be OK and the before-takeoff check items that have been determined to be NG. The server 4 may transmit the result of the determination of Step S10 to the user terminal 3 without transmitting the result of the comparison of Step S9 to the user terminal 3. The server 4 may omit Step S10 and transmit the result of the comparison of Step S9 to the user terminal 3, and the user 10 who has seen the result of the comparison on the user terminal 3 may determine whether or not the takeoff is permitted.

Moreover, the server 4 stores the result of the comparison of Step S9 and the result of the determination of Step S10 in a result database of the internal database 5 (Step S12). When the database that stores the flight management manuals in the internal database 5 is referred to as a first database, the result database may be referred to as a second database. The result of the comparison and the result of the determination can be verified later by referring to the result database of the internal database 5.

The user terminal 3 receives the result of the comparison and the result of the determination from the server 4 (Step S13). The user terminal 3 displays the received result of the comparison and the received result of the determination on the output interface 13 (Step S14).

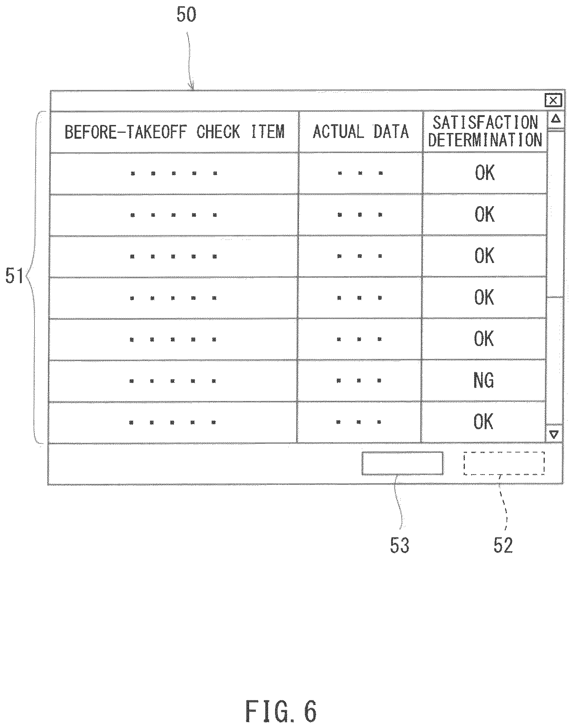

FIG. 6 is one example of a screen image 50 displayed on the output interface 13 of the user terminal 3 of FIG. 2. As shown in FIG. 6, the screen image 50 displays a result list 51. The result list 51 displays the before-takeoff check items, the pieces of actual data corresponding to the respective before-takeoff check items; and satisfaction determination results corresponding to the respective before-takeoff check items. In each of fields of the before-takeoff check items, the name of the item and the condition of normal data are displayed.

The user terminal 3 may display the before-takeoff check items such that a display color of the before-takeoff check item that has been determined to be OK is made different from a display color of the before-takeoff check item that has been determined to be NG. To be specific, the information that has been determined to be NG serves as information that makes the display color of the before-takeoff check item that has been determined to be OK different from the display color of the before-takeoff check item that has been determined to be NG. The user 10 who has seen the screen image 50 can easily grasp the before-takeoff check item that has been determined to be NG.

Referring back to FIG. 5, when the result of the determination which has been received by the user terminal 3 from the server 4 indicates that the takeoff is permitted (YES in Step S15), the user terminal 3 unlocks a takeoff operation lock (Step S16). On the other hand, when the result of the determination which has been received by the user terminal 3 from the server 4 indicates that the takeoff is not permitted (NO in Step S15), the user terminal 3 returns to an initial screen image without unlocking the takeoff operation lock.

Specifically, the screen image 50 of FIG. 6 can display an unlock button 52 and a redo button 53. The unlock button 52 instructs transition to a screen image by which the takeoff operation of the target aircraft 2 can start. The redo button 53 instructs transition to a screen image by which the before-takeoff processing is redone. In the example of FIG. 6, since one of the essential items among all the before-takeoff check items is determined to be NG, it is determined that the takeoff is not permitted. Therefore, the screen image 50 displays the unlock button 52 as an inactive button. Even when the unlock button 52 displayed as the inactive button is operated by the user 10, such operation is invalidated. To be specific, a state where the unlock button 52 is displayed as the inactive button denotes a state where the takeoff operation of the user terminal 3 is being locked.

On the other hand, a state where the unlock button 52 is displayed as an active button denotes a state where the takeoff operation of the user terminal 3 is not being locked. When the unlock button 52 displayed as the active button is operated by the user 10, the screen image 50 transitions to the screen image by which the takeoff operation of the target aircraft 2 can start. To be specific, the information which is transmitted from the server 4 to the user terminal 3 and indicates that the takeoff is permitted serves as a signal that commands the unlocking of the takeoff operation lock in the user terminal 3. Thus, the user 10 is prevented from mistakenly starting the takeoff operation in a situation unsuitable for the takeoff.

According to the above configuration, since the actual data is compared with the before-takeoff check item of the flight management manual corresponding to the airframe type of the target aircraft 2, whether or not the takeoff is permitted can be determined in accordance with the airframe type. Therefore, the opportunity loss of the flight can be reduced, and the appropriate determination regarding the permission of the takeoff in accordance with the airframe type can be realized.

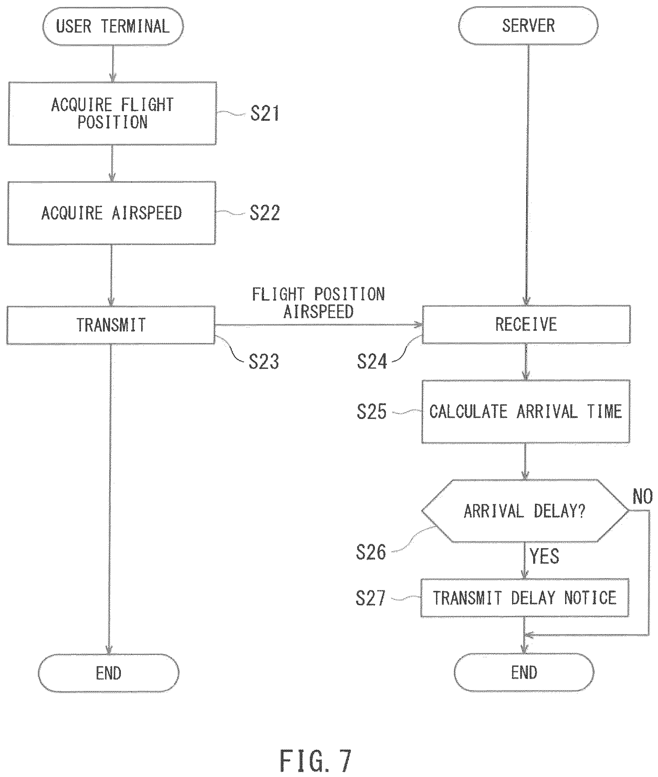

FIG. 7 is a sequence diagram for explaining before-arrival processing of the flight support system 1 of FIG. 1. As shown in FIG. 7, the user terminal 3 utilizes the satellite positioning system to acquire a current flight position of the target aircraft 2 (Step S21). The user terminal 3 acquires a current airspeed, which has been detected by an airspeed sensor mounted on the target aircraft 2, through wireless communication (Step S22). The airspeed of the target aircraft 2 may be calculated from a change in the position of the target aircraft 2 which is acquired by the satellite positioning system. The user terminal 3 transmits the flight position and airspeed of the target aircraft 2 to the server 4 (Step S23).

The server 4 receives the flight position and airspeed of the target aircraft 2 from the server 4 (Step S24). The server 4 calculates an estimated arrival time at the scheduled landing place from the current flight position and current airspeed of the target aircraft 2 (Step S25). To be specific, the server 4 calculates a remaining distance from the flight position of the target aircraft 2 to the scheduled landing place and divides the remaining distance by the airspeed. Thus, the sever 4 calculates a necessary time it takes for the target aircraft 2 to arrive at the scheduled landing place from the current time. To be specific, the estimated arrival time is a time obtained by adding the calculated necessary time to the current time. The airspeed may be calculated by dividing a distance between two flight positions that are a past flight position and current flight position of the target aircraft 2 by a time required for the movement between the two flight positions.

The server 4 determines whether or not the calculated estimated arrival time is later than the scheduled landing time beyond an allowable range (Step S26). The allowable range may be zero. The scheduled landing time at which the target aircraft 2 which has taken off lands at the scheduled landing place may be stored in the internal database 5 as part of the flight plan. When the server 4 determines that the time at which the target aircraft 2 arrives at the scheduled landing place is later than the scheduled landing time beyond the allowable range (YES in Step S26), the server 4 generates a delay notice and transmits the delay notice to the air-traffic control equipment 7 (Step S27). When the server 4 determines that the time at which the target aircraft 2 arrives at the scheduled landing place is not later than the scheduled landing time beyond the allowable range (NO in Step S26), the server 4 does not generate the delay notice.

The air-traffic control equipment 7 which has received the delay notice regarding the target aircraft 2 may transmit a notice to the user terminals of the other aircrafts which may fly in the vicinity of the scheduled landing place of the target aircraft 2 at around the calculated estimated arrival time. As above, since the server 4 informs the air-traffic control equipment 7 of a probability that the target aircraft 2 will arrive at the scheduled landing place behind the scheduled landing time, the server 4 can urge the air-traffic control equipment 7 to take a measure against arrival delay.

Part of the program P1 or the entire program P1 in the above embodiment may be executed by the server 4 instead of the user terminal 3. Part of the program P2 in the above embodiment may be executed by the user terminal 3 instead of the server 4. The foregoing has described the sequence regarding the permission of the takeoff. A sequence similar to the above sequence may be performed regarding the permission of the landing.

The foregoing has described the embodiment as an example of the technology disclosed in the present application. However, the technology in the present disclosure is not limited to this and is applicable to embodiments in which modifications, replacements, additions, omissions, and the like have been suitably made. Moreover, the components shown in the attached drawings and the detailed explanations include not only components essential to solve the problems but also components for exemplifying the above technology and not essential to solve the problems.

The functionality of the elements disclosed herein may be implemented using circuitry or processing circuitry which includes general purpose processors, special purpose processors, integrated circuits, ASICs (Application Specific Integrated Circuits), FPGA (Field Programmable Gate Array), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The following aspects disclose preferred embodiments.

### First Aspect

A flight support system that supports flight of an aircraft,
the flight support system including:
a database that stores flight management manuals each of which includes before-takeoff check items that are different among airframe types; and
processing circuitry connected to the database and configured to
   receive a takeoff permission request of a target aircraft from a user terminal,
   acquire the airframe type of the target aircraft,
   acquire actual data regarding the before-takeoff check item corresponding to the target aircraft,
   refer to the database and compare the actual data with the before-takeoff check item of the flight management manual corresponding to the airframe type of the target aircraft, and
   transmit output information to the user terminal, the output information including information regarding a result of the comparison.

According to this configuration, since the actual data is compared with the before-takeoff check item of the flight management manual corresponding to the airframe type of the target aircraft, whether or not the takeoff is permitted can be determined in accordance with the airframe type. Therefore, the opportunity loss of the flight can be reduced, and the appropriate determination regarding the permission of the takeoff in accordance with the airframe type can be realized.

### Second Aspect

The flight support system according to the first aspect, wherein the before-takeoff check items include at least one selected from the group consisting of an environment in a location including a takeoff place, an airframe state, a flight permitted area, and a flight permitted date-and-time range.

According to this configuration, whether or not the takeoff is permitted can be appropriately determined.

### Third Aspect

The flight support system according to the first or second aspect, wherein:
the processing circuitry is configured to determine based on the result of the comparison whether or not the target aircraft is permitted to take off; and
the information regarding the result of the comparison includes information indicating a result of the determination regarding whether or not the target aircraft is permitted to take off.

According to this configuration, the user who has transmitted the takeoff permission request can easily grasp by the user terminal whether or not the takeoff is permitted.

### Fourth Aspect

The flight support system according to the third aspect, wherein when the processing circuitry determines that the target aircraft is permitted to take off, the output information includes a signal that commands unlocking of a takeoff operation lock in the user terminal.

According to this configuration, the misoperation of the user terminal can be prevented.

### Fifth Aspect

The flight support system according to any one of the first to fourth aspects, wherein:
the processing circuitry is configured to determine based on sensor data detected by a sensor mounted on the target aircraft whether or not the target aircraft is normal; and
the actual data includes data regarding whether or not the target aircraft is normal.

According to this configuration, whether or not the takeoff is permitted can be determined based on whether or not the target aircraft is normal.

### Sixth Aspect

The flight support system according to any one of the first to fifth aspects, wherein the output information includes information indicating the before-takeoff check item including a condition that is not satisfied by the actual data among the before-takeoff check items.

According to this configuration, the user can grasp the before-takeoff check item including the condition that is not satisfied.

### Seventh Aspect

The flight support system according to any one of the first to sixth aspects, wherein the output information includes information that makes a display color of the before-takeoff check item including a condition that is not satisfied by the actual data among the before-takeoff check items different from a display color of the before-takeoff check item including a condition that is satisfied by the actual data among the before-takeoff check items.

According to this configuration, the user can visually and easily grasp the before-takeoff check item including the condition that is not satisfied.

### Eighth Aspect

The flight support system according to any one of the first to seventh aspects, wherein the processing circuitry is configured to store the information regarding the result of the comparison in a second database.

According to this configuration, the result of the comparison can be verified later.

### Ninth Aspect

The flight support system according to any one of the first to eighth aspects, wherein:
the database stores a scheduled landing time at which the target aircraft that has taken off lands on a scheduled landing place; and
the processing circuitry is configured to
   acquire a flight position of the target aircraft,
   determine based on the flight position whether or not the target aircraft arrives at the scheduled landing place behind the scheduled landing time; and
   generate a delay notice when the processing circuitry determines that the target aircraft arrives at the scheduled landing place behind the scheduled landing time beyond an allowable range.

According to this configuration, the processing circuitry can inform the outside of a probability that the target aircraft will arrive at the scheduled landing place behind the scheduled landing time, and can urge the outside to take a measure against this.

### Tenth Aspect

A flight support method that supports flight of an aircraft,
the flight support method including:
receiving a takeoff permission request of a target aircraft from a user terminal;
acquiring an airframe type of the target aircraft;
acquiring actual data regarding a before-takeoff check item corresponding to the target aircraft;
referring to a database that stores flight management manuals each of which includes before-takeoff check items that are different among airframe types, and comparing the actual data with the before-takeoff check item of the flight management manual which corresponds to the airframe type of the target aircraft; and
transmitting output information to the user terminal, the output information including information regarding a result of the comparison.

### Eleventh Aspect

A flight support program that makes at least one processor execute the flight support method according to the tenth aspect.

### Reference Signs List

- 1: flight support system
- 2: target aircraft
- 3: user terminal
- 4: server
- 5: internal database
- 6: open database
- 11: first processing circuitry
- 16: processor
- 21: second processing circuitry
- 26: processor
- 52: unlock button
- P1, P2: program

## Claims

1. A flight support system that supports flight of an aircraft,
the flight support system comprising:
a database that stores flight management manuals each of which includes before-takeoff check items that are different among airframe types; and
processing circuitry connected to the database and configured to
receive a takeoff permission request of a target aircraft from a user terminal,
acquire the airframe type of the target aircraft,
acquire actual data regarding the before-takeoff check item corresponding to the target aircraft,
refer to the database and compare the actual data with the before-takeoff check item of the flight management manual corresponding to the airframe type of the target aircraft, and
transmit output information to the user terminal, the output information including information regarding a result of the comparison.

2. The flight support system according to claim 1, wherein the before-takeoff check items include at least one selected from the group consisting of an environment in a location including a takeoff place, an airframe state, a flight permitted area, and a flight permitted date-and-time range.

3. The flight support system according to claim 1 or 2, wherein:
the processing circuitry is configured to determine based on the result of the comparison whether or not the target aircraft is permitted to take off; and
the information regarding the result of the comparison includes information indicating a result of the determination regarding whether or not the target aircraft is permitted to take off.

4. The flight support system according to claim 3, wherein when the processing circuitry determines that the target aircraft is permitted to take off, the output information includes a signal that commands unlocking of a takeoff operation lock in the user terminal.

5. The flight support system according to any one of claims 1 to 4, wherein:
the processing circuitry is configured to determine based on sensor data detected by a sensor mounted on the target aircraft whether or not the target aircraft is normal; and
the actual data includes data regarding whether or not the target aircraft is normal.

6. The flight support system according to any one of claims 1 to 5, wherein the output information includes information indicating the before-takeoff check item including a condition that is not satisfied by the actual data among the before-takeoff check items.

7. The flight support system according to any one of claims 1 to 6, wherein the output information includes information that makes a display color of the before-takeoff check item including a condition that is not satisfied by the actual data among the before-takeoff check items different from a display color of the before-takeoff check item including a condition that is satisfied by the actual data among the before-takeoff check items.

8. The flight support system according to any one of claims 1 to 7, wherein the processing circuitry is configured to store the information regarding the result of the comparison in a second database.

9. The flight support system according to any one of claims 1 to 8, wherein:
the database stores a scheduled landing time at which the target aircraft that has taken off lands on a scheduled landing place; and
the processing circuitry is configured to
acquire a flight position of the target aircraft,
determine based on the flight position whether or not the target aircraft arrives at the scheduled landing place behind the scheduled landing time; and
generate a delay notice when the processing circuitry determines that the target aircraft arrives at the scheduled landing place behind the scheduled landing time beyond an allowable range.

10. A flight support method that supports flight of an aircraft,
the flight support method comprising:
receiving a takeoff permission request of a target aircraft from a user terminal;
acquiring an airframe type of the target aircraft;
acquiring actual data regarding a before-takeoff check item corresponding to the target aircraft;
referring to a database that stores flight management manuals each of which includes before-takeoff check items that are different among airframe types, and comparing the actual data with the before-takeoff check item of the flight management manual which corresponds to the airframe type of the target aircraft; and
transmitting output information to the user terminal, the output information including information regarding a result of the comparison.

11. A flight support program that makes at least one processor execute the flight support method according to claim 10.
